# EUROPÄISCHE PATENTANMELDUNG

(11) **EP 3 483 026 A1**
(43) Veröffentlichungstag der Anmeldung: **15.05.2019**
(21) Anmeldenummer: 18204846.2
(22) Anmeldetag: 07.11.2018
(51) Int. Cl.: B60W 50/10, B60K 35/00, G06Q 50/30, G05D 1/02, G01C 21/36

(54) **VERFAHREN UND VORRICHTUNG UM EINEN SCHNELLEN HALT EINES AUTONOM FAHRENDEN FAHRZEUGS ZU ERMÖGLICHEN**

(30) Priorität: 13.11.2017 DE 102017220116
(71) Anmelder: Ford Global Technologies, LLC, Dearborn, MI 48126 (US)
(72) Erfinder: Hennes, Nikica, 52076 Aachen (DE); Wolf, Philipp, 50670 Köln (DE); Wolter, Stefan, 52146 Würselen (DE)
(74) Vertreter: Dörfler, Thomas

(57) **Zusammenfassung**

Das autonom fahrende Fahrzeug (20) ist mit einer GPS-Einheit (32) ausgerüstet, der eine Bibliothek (34) von Sonderzielen zugeordnet ist, und weist eine Mensch-Maschine-Schnittstelle (22) auf, die mit der GPS-Einheit (32) verbunden ist und die mindestens eines der folgenden Eingabemittel für die Eingabe eines Befehls zum möglichst sofortigen Stoppen des Fahrzeugs (20) aufweist:
- eine Einheit für Spracheingabe (24), die mit der Schnittstelle (22) verbunden ist,
- ein Modul für Erkennung von Gesten (26), das mit der Schnittstelle (22) verbunden ist, und
- einen berührungsempfindlichen Bildschirm (28), der mit der Schnittstelle (22) verbunden ist.

Das Fahrzeug kann ein autonom fahrendes Shuttle sein.

## Beschreibung

Die Erfindung bezieht sich auf eine Mensch-Maschine-Interface-Lösung, um einen schnellen Halt eines autonom fahrenden Fahrzeugs, insbesondere eines völlig autonomen Shuttles zu ermöglichen.

Autonomes Fahren wird schon zum Anmeldezeitpunkt dieser Anmeldung praktiziert und immer weiterentwickelt. Die Norm SAE J3016 beschreibt die Klassifizierung und Definition von Begriffen für straßengebundene Kraftfahrzeuge mit Systemen zum autonomen Fahren. Sie gilt seit Januar 2014. Die Klassifizierung kennt sechs Stufen und beschreibt deren Mindestanforderungen. Je nach Ausstattung und deren Nutzung in einem Fahrzeug kann dieses zwischen den Stufen wechseln.

Für die Erfindung sind die Stufen 4 und 5 relevant. Die Stufe 4 bezieht sich auf automatisierte Führung des Fahrzeugs mit der Erwartung, dass der Fahrer auf Anforderung zum Eingreifen reagiert. Ohne menschliche Reaktion steuert das Fahrzeug weiterhin autonom. Die Stufe 5 bezieht sich auf vollständig autonomes Fahren, bei dem die dynamische Fahraufgabe auf fahrzeugtauglicher Fahrbahn und unter beliebigen Umgebungsbedingung wie von einem menschlichen Fahrer durchgeführt wird. Der Mensch kann jedoch eingreifen, er kann noch Steuereingaben durchführen.

Die US 2014/0277900 A1 und die US 2014/0136414 A1 offenbaren relativ kleine fahrerlose Lieferfahrzeuge, die vollständig autonom von Ziel zu Ziel navigieren. Dies ist ohne größere Gefährdung des Straßenverkehrs möglich, weil sich diese Lieferroboter vorwiegend auf Bürgersteigen bewegen. Hingegen eignet sich die Erfindung in erster Linie für Kraftfahrzeuge im Straßenverkehr, welche normalerweise mindestens einen Menschen als Passagier an Bord haben und mit welchen eine Reihe unterschiedlicher Ziele angesteuert werden können.

Die DE10 2015 204 947 A1 betrifft ein Verfahren und eine Vorrichtung zum Betrieb eines Kraftfahrzeugs, wenn dessen Fahrer entlang einer vorgegebenen Route eine Reihe von Aufgaben zu erledigen hat, die jeweils erfordern, dass der Fahrer das Kraftfahrzeug abstellt, verlässt und gewisse Strecken zu Fuß zurücklegt, wobei das Kraftfahrzeug dafür eingerichtet ist, wahlweise unter der Steuerung eines an Bord des Kraftfahrzeugs befindlichen menschlichen Fahrers oder zumindest streckenweise autonom zu fahren. Wenn der Fahrer das Kraftfahrzeug zwecks Aufgabenerledigung abstellt, wird gemäß der Erfindung anhand eines elektronischen Plans der Aufgaben des Fahrers geprüft, ob es für die Aufgabenerledigung günstiger wäre, wenn das Kraftfahrzeug am Abstellort stehenbleiben würde oder es zu einem in Fahrtrichtung liegenden Haltepunkt weiterfahren würde, wobei das Kraftfahrzeug im letzteren Fall ohne den Fahrer autonom zu dem nächsten in Fahrtrichtung liegenden Haltepunkt fährt und dort stehenbleibt.

Unter einem Shuttle werden von mehreren Personen benutzbare Einrichtungen des Kraftverkehrs verstanden. Hierzu gehören zum Beispiel Shuttlebusse und Pendelbusse. Die Shuttles, auf die sich die Erfindung richtet, zeichnen sich durch freie Wahl der Ziele und Fahrstrecken aus. Sie unterscheiden sich insoweit von Shuttles der Stufe 0, die in der Regel regelmäßige Hin- und Zurück-Transportverbindungen zu meist festgelegten Zeiten (halbstündlich, stündlich usw.) durchführen. Sie unterscheiden sich aber nicht insoweit, als die Handhabung unkompliziert ist. Die Routen sind kurzfristig wählbar und eventuell auch zeitlich von vornherein grob spezifiziert, damit nicht ein Passagier in ein Shuttle einsteigt, das schon auf ein Ziel weit im Norden programmiert ist, während der Passagier ein Ziel im Süden anstrebt. Zu den Shuttles gemäß der Erfindung gehören z.B. auch Vorfeldbusse eines Flughafenterminals, die im Flughafenvorfeld fahren, weiterhin Busse, die Messebesucher von einem Parkplatz zu einem Messeeingang transportieren usw..

Die Erfindung ist nicht auf Shuttles begrenzt. Sie betrifft auch normale PKWs bzw. Kraftfahrzeuge. Es genügt ein einzelner Passagier an Bord. Vorzugsweise befinden sich mehrere Passagiere mit unterschiedlichen Fahrzielen an Bord. Vorzugsweise sind die Passagiere an unterschiedlichen Haltepunkten in das Fahrzeug eingestiegen. Die Erfindung betrifft auch Fahrzeuge für Passagiere, die an einem festgelegten Haltepunkt oder Startpunkt gemeinsam eingestiegen sind. Selbstfahrende Fahrzeuge und hier insbesondere Shuttles, die gemäß SAE Stufe 4 und 5 fahren, werden in den kommenden Jahren mehr und mehr zur Verfügung stehen. Anfangs der Fahrt muss der mindestens eine Passagier ein von ihm gewünschtes Ziel eingeben, mehrere Passagiere eines Shuttles geben ihre eigenen, zumeist unterschiedlichen Ziele ein. Erst nach mindestens einer Zieleingabe kann das Fahrzeug starten. Nach dem Start und während der Fahrt können Änderungen nur noch durch eine zusätzliche Zieleingabe eingegeben werden.

Dabei entsteht aber das folgende Problem: Es ist nicht mehr möglich, das Fahrzeug an einem interessanten Punkt auf der Straße schnell zu stoppen, wenn sich ein Passagier spontan einen derartigen Stopp wünscht. Normalerweise wird eine derartige Entscheidung, direkt an einem interessanten Punkt zu stoppen, sehr rasch getroffen. Bei einem klassischen Fahrzeug mit eigenständig fahrendem Fahrer, SAE Stufe 0, ist es in der Regel kein Problem, das Fahrzeug unmittelbar zu stoppen und gegebenenfalls einen Halt- oder Parkplatz zu suchen. Bei den hier betrachteten Fahrzeugen nach SAE Stufe 4 und 5 muss aber erst umständlich eine neue Zieleingabe gemacht werden. Dies ist auch bei modernen Eingabesystemen, beispielsweise Spracheingabe, in der Regel umständlich und erfordert eine gewisse Zeit. Es stellt daher ein Problem dar, wenn ein Passagier ein Restaurant sieht oder auf der Straße ein Geschäft oder ein Kino entdeckt, wo sehr kurzfristig und spontan ein Besuch gewünscht wird. Der Passagier ist auch in der Regel nicht unmittelbar darauf vorbereitet und eingeübt, wie er einen spontanen Halt erreichen kann. Es ist daher wichtig, dass der spontane Halt mit möglichst einfachen Mitteln und ohne ausführliche vorherige Einweisung erreicht werden kann.

Hiervon ausgehend ist es Aufgabe der Erfindung, ein autonom fahrendes Fahrzeug, insbesondere ein derartiges Shuttle, so weiterzubilden, dass es so rasch und spontan angehalten werden kann, wie dies für klassische Fahrzeuge nach Stufe 0 bekannt ist. Dabei sollten die für den Stopp notwendigen Maßnahmen nicht erst eingeübt werden müssen, sondern sehr einfach und naheliegend durchführbar sein.

Diese Aufgabe wird gelöst durch das Verfahren zum raschen Stoppen eines autonom fahrenden Fahrzeugs aufgrund eines Befehls eines an Bord des Fahrzeugs befindlichen Passagiers und während einer autonomen Fahrt des Fahrzeugs zu einem zuvor ausgewählten Endziel, mit den folgenden Verfahrensschritten
a) der Passagier identifiziert ein zuvor dem Fahrzeug nicht mitgeteiltes Zwischenziel,
b) der Passagier erteilt einer Schnittstelle einen Stoppbefehl, insbesondere durch Spracheingabe, Gesteneingabe oder Eingabe auf einem berührungsempfindlichen Bildschirm,
c) die Schnittstelle ermittelt unter Berücksichtigung von Daten einer GPS-Einheit und einer Liste möglicher Haltepunkte, ob ein Stopp des Fahrzeugs unmittelbar oder in näherer Umgebung möglich ist, ermittelt mit Hilfe der Steuerungssoftware des Fahrzeugs mindestens einen freien Halteplatz, und teilt, wenn ein Stopp möglich ist und ein freier Halteplatz gefunden wurde, dem Passagier mit, dass ein Stopp erfolgen wird,
d) die Schnittstelle veranlasst die Steuerungssoftware des Fahrzeugs, zu dem freien Halteplatz zu fahren und dort zu stoppen.

Die Aufgabe wird weiterhin gelöst durch ein autonom fahrendes Fahrzeug, insbesondere autonom fahrendes Shuttle, mit einer GPS-Einheit, der eine Bibliothek von Sonderzielen zugeordnet ist,
gekennzeichnet durch eine Mensch-Maschine-Schnittstelle, die mit der GPS-Einheit verbunden ist und die mindestens eines der folgenden Eingabemittel für die Eingabe eines Befehls zum möglichst sofortigen Stoppen des Fahrzeugs aufweist:
- eine Einheit für Spracheingabe, die mit der Schnittstelle verbunden ist,
- ein Modul für Erkennung von Gesten, das mit der Schnittstelle verbunden ist, und
- einen berührungsempfindlichen Bildschirm, der mit der Schnittstelle verbunden ist.
Dabei kann der Bildschirm entweder im Fahrzeug befestigt sein oder Teil eines mobilen Geräts sein, z. B. einem Mobiltelefon.

Die hier vorgestellte Lösung schlägt einen Weg vor, um schnell ein autonomes Shuttle und generell ein autonom fahrendes Fahrzeug an einem Sonderziel (point of interest) zu stoppen. Falls einer der Passagiere das Fahrzeug stoppen will, können folgende Methoden verwendet werden:
1. sprachgesteuerter Befehl: Der Passagier gibt einen vordefinierten Sprachbefehl ein, wie z.B. "Stopp im Restaurant auf der rechten Seite" oder "Stopp in 50 Metern auf der linken Seite".
2. Befehl durch eine spezielle Geste, beispielsweise eine Wellengeste, die mit der Hand gemacht wird. Über die On-Board-Kameras, die die Passagiere beobachten, ist es möglich, die Handbewegungen des Passagiers zu erkennen. Zeigende Gesten können verwendet werden, um schnell den Ort anzugeben, an dem ein Passagier das autonom fahrende Fahrzeug stoppen will. Die Wellengeste kann zuvor über eine Tastenbetätigung aktiviert werden, z.B. muss zunächst eine Eingabe auf einem Feld des berührungsempfindlichen Bildschirms erfolgen, damit die Schnittstelle informiert ist, dass nun ein spezieller Befehl, insbesondere ein Stoppbefehl, nachfolgt. Dies kann auch in Kombination mit einer Sprachsteuerung erfolgen.
3. Der Befehl kann auch durch Betätigen einer speziellen Taste, beispielsweise Druck auf den Bildschirm des GPS-Systems oder auf eine Not-Haltetaste eingegeben werden. Eine Not-Haltetaste entspricht einem Stoppmittel wie der Notbremse, wie es beispielsweise in Zügen der Eisenbahn vorgesehen ist.

Allgemeine Sonderziele sind über ihre GPS-Daten verfügbar, so dass ein reguläres Sonderziel, das durch einen der Befehle eingegeben wurde, leicht zu identifizieren ist. Dies betrifft z.B. Restaurants entlang der Straße. Nun gibt es aber auch individuelle Sonderziele, die ein Passagier erreichen möchte. Erkennt der Passagier beispielsweise einen Bekannten auf der Straße und möchte ihn unmittelbar ansprechen, helfen die entsprechenden GPS-Daten nicht weiter. Aber auch in diesem Fall soll und wird das Fahrzeug möglichst rasch anhalten.

Die Steuereinheit des Fahrzeugs stellt zunächst fest, ob ein Stopp unmittelbar am oder in Nähe des angegebenen Sonderziels überhaupt möglich ist. Falls es so ist, wird das Fahrzeug stoppen.

Die Steuereinheit reagiert auf einen erkannten Stoppbefehl. Sie gibt zumindest eine Aussage darüber ab, ob ein Halt an der gewünschten Stelle möglich ist. Ist ein Halt an der gewünschten Stelle nicht möglich, gibt die Steuereinheit vorzugsweise eine Aussage darüber ab, wo der nächste Halt erfolgen kann und das Fahrzeug halten wird. Gegebenenfalls gibt die Steuereinheit dem betreffenden Passagier die Möglichkeit, den vorgeschlagenen Stopp zu akzeptieren oder nicht.

Vorzugsweise reagiert die Steuereinheit auf einen erkannten Stoppbefehl mit einer Rückfrage. Diese kann auf die Dauer des Stopps bezogen sein. So wird abgefragt, ob nur ein kurzer Halt für ein Aussteigen gewünscht wird, oder ob ein längerer Halt benötigt wird. Die Steuereinheit kann auch fragen, ob ein kurzer Halt oder ein Parken für eine gewisse Zeit vom Passagier gewünscht ist. Der Passagier kann dann die entsprechende Eingabe machen. Die Steuereinheit macht dann die oben erwähnte Aussage, ob die gewünschte Art des Stopps realisierbar ist oder nicht.

Weitere Fortbildungen und Merkmale der Erfindung ergeben sich aus den Unteransprüchen. Ein Ausführungsbeispiel der Erfindung wird im Folgenden unter Bezugnahme auf die Zeichnung näher dargestellt und erläutert. Dieses Ausführungsbeispiel ist nicht einschränkend zu verstehen. In der Zeichnung zeigen
- Fig. 1: ein Blockdiagramm der für die Erfindung relevanten Funktionen und Schaltungen des Fahrzeugs, und
- Fig. 2: ein Ablaufdiagramm für das Verfahren zum spontanen Anhalten eines Fahrzeugs.

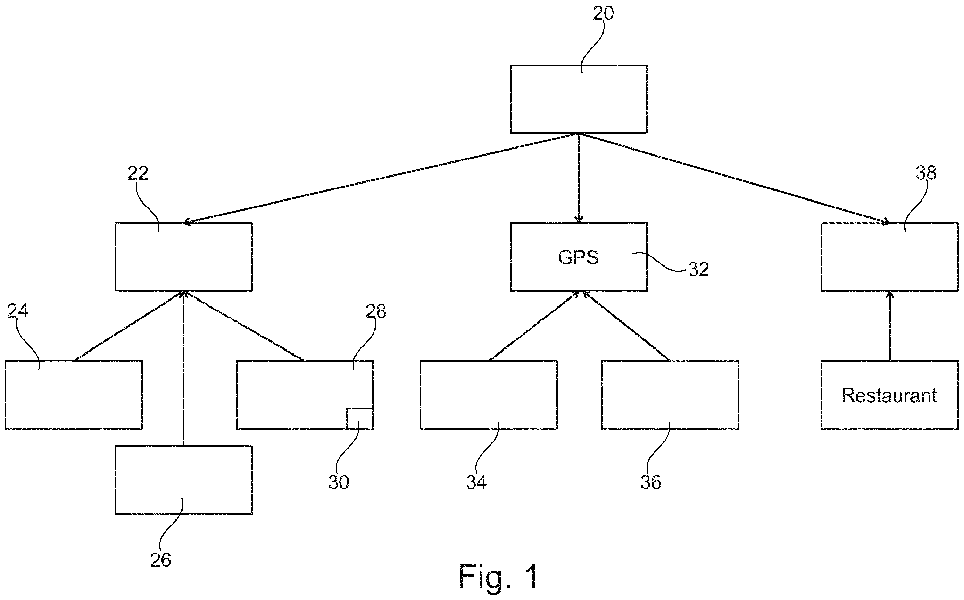

Figur 1 zeigt ein autonom fahrendes Fahrzeug 20, das mit einer erfindungsgemäßen Mensch-Maschine-Schnittstelle 22 ausgestattet ist. Diese hat ihrerseits eine Einheit für Spracheingabe 24, ein Modul für Erkennung von Gesten 26 und einen berührungsempfindlichen Bildschirm 28. Die Einheit für Spracheingabe 24 empfängt über ein Mikrofon (nicht dargestellt) Sprachbefehle und leitet diese an die Schnittstelle 22 weiter. Ein möglicher Sprachbefehl ist "Stopp vor dem Restaurant auf der rechten Straßenseite". Das Modul für Erkennung von Gesten 26 weist mindestens eine Kamera (nicht dargestellt) auf und ist auf die Erkennung bestimmter, in einem Katalog befindlicher Gesten ausgelegt. Wird beispielsweise eine Geste eingegeben, die einem unmittelbaren Stopp zugeordnet ist, zum Beispiel Wellengeste, so leitet das Modul 26 eine entsprechende Information an die Schnittstelle 22 weiter. Über den berührungsempfindlichen Bildschirm 28 kann ebenfalls ein Stoppbefehl eingegeben werden. Dieser Bildschirm 28 kann ein Feld 30 aufweisen, das einem Stoppbefehl zugeordnet ist. Vorzugsweise erfordert die Eingabe eines Sprachbefehls und/oder einer Geste für sofortigen Halt des Fahrzeugs 20 zuvor das Betätigen des Feldes 30. Dadurch wird sichergestellt, dass nicht ungewollt über Gesten oder über ein Gespräch Befehle erteilt werden, die der betreffende Passagier nicht erteilen wollte.

Das Feld 30 ist vorzugsweise auf dem berührungsempfindlichen Bildschirm 28 ausgebildet. Es kann aber auch anderweitig ausgeführt sein, beispielsweise als einfacher Taster, als Nothaltevorrichtung wie beispielsweise eine Notbremse usw..

Das Fahrzeug 20 ist weiterhin mit einer GPS-Einheit 32 ausgestattet. Sie hat, wie dies Stand der Technik ist, eine Bibliothek 34 der Sonderziele. Die GPS-Einheit 32 ist über den aktuellen Standort des fahrenden Fahrzeugs 20 informiert und entnimmt dann, wenn ein Passagier einen konkreten Stoppbefehl gibt, beispielsweise wie oben, die Koordinaten des entsprechenden Restaurants aus dieser Bibliothek 34.

Weiterhin ist die GPS-Einheit 32 mit einer Liste möglicher Haltepunkte 36 verbunden. In dieser sind die möglichen Haltepunkte für das Fahrzeugs 20 enthalten, die zum Beispiel aus einer hochwertigen Straßenkarte selektiert werden, oder speziell bei dem Erfassen einer Straßenkarte erkannt wurden. Die Haltepunkte werden spätestens nach dem Stoppbefehl in die aktuelle, elektronische Straßenkarte, nach der das Fahrzeug 20 autonom gesteuert wird, eingebracht.

Die GPS-Einheit 32 ist mit einer Datei 38 von Zielen verbunden, die einen raschen Stopp ermöglichen. Hier handelt sich beispielsweise um Angaben zu Parkplätzen von Restaurants oder Geschäften, Haltebuchten, Parkplätze, öffentliche Parkhäuser. Es ist vorteilhaft, diese Datei 38 der Haltemöglichkeiten mit einem konkreten Ziel, zum Beispiel einem Geschäft oder Restaurant, unmittelbar zu verknüpfen, wenn es sich um eine Parkmöglichkeit des Geschäftes bzw. Restaurants handelt. Die Datei 38 der Haltemöglichkeiten kann auch mittelbar mit einem Sonderziel verknüpft sein, wenn die Parkmöglichkeit einen günstigen Zugang zu diesem Sonderziel ermöglicht, insbesondere in seiner Nähe liegt.

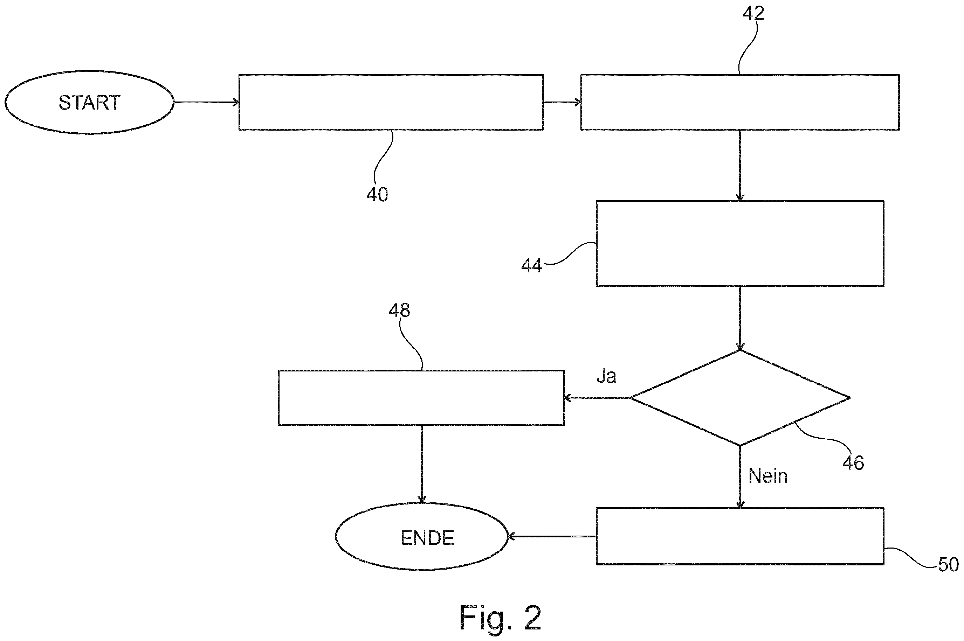

Aus Figur 2 ist es der Ablauf des Verfahrens ersichtlich. Zum Zeitpunkt START wird das betrachtete Fahrzeug 20 autonom und entsprechend der früheren Zieleingabe. Nun entdeckt ein Passagier plötzlich ein Sonderziel, beispielsweise sieht er ein Restaurant, erkennt einen Freund auf der Straße oder entdeckt ein spezielles Geschäft, dies ist in der Box 40 angegeben. Der Passagier spricht nun die Schnittstelle 22 an. In der Box 42 interagiert er mit der Schnittstelle 22. Er gibt über die Einheit 24 für Spracheingabe, das Modul 26 oder den Bildschirm 28 einen Befehl ein. Vorzugsweise betätigt er das Feld 30 und gibt dem Befehl "Stopp an dem Restaurant rechts". Die Schnittstelle 22 erkennt diesen Befehl und verarbeitet ihn in der Box 44. Die Schnittstelle ermittelt, ob das Restaurant eine eigene Parkmöglichkeit hat, ob, wenn dies nicht der Fall ist, eine andere Parkmöglichkeit in unmittelbarer Nähe erreichbar ist. Die Software des Fahrzeugs 20 ist in der Lage, einen freien Parkplatz zu finden und in diesem einzupacken. Die Schnittstelle 22 quittiert den Befehl beispielsweise mit der Sprachausgabe "ich werde am nächst gelegenen Parkplatz einparken". Dementsprechend wird in der Raute 46 durch die Schnittstelle 22 die Entscheidung getroffen, ob ein Halt möglich ist, siehe ja, oder nicht, siehe nein. Im Falle ja stoppt das Fahrzeug 20 an der ausgewählten Stelle, siehe Box 48. Im Falle nein informiert die Schnittstelle den Passagier, dass kein Halt möglich ist, siehe Box 50. Die Schnittstelle 22 kann anfragen, ob sie in der Umgebung nach einem geeigneten Halteplatz suchen soll. Dies kann der Passagier akzeptieren oder aber auf den Halt verzichten.

Dabei geht die Schnittstelle 22 davon aus, dass aufgrund der Art des gewählten Zwischenziels, nämlich einem Restaurant, ein längerer Stopp bevorsteht. Hätte der Befehl gelautet "Stopp, kurz halten, nur für das Aussteigen" hätte die Schnittstelle 22 über die ihr zur Verfügung stehende GPS-Einheit 32 und die Bibliothek 34 einen einfachen Haltepunkt für ein kurzes Anhalten gewählt und dies entsprechend dem Passagier mitgeteilt.

Unabhängig davon kann die Schnittstelle abfragen, ob ein kurzer oder ein längerer Halt gewünscht wird. Entsprechend kann sie wählen, ob nur eine einfache Haltemöglichkeit oder ein für längere Dauer geeigneter Parkplatz, zum Beispiel ein Parkhaus, angesteuert wird. Es ist auch vorteilhaft, wenn die Schnittstelle 22 nach Erhalt eines Stoppbefehls darum bittet, diesen noch einmal zu bestätigen oder anderweitig zu verifizieren. Ein Stopp stellt eine Unterbrechung dar und bedeutet auch ein gewisses Risiko im Straßenverkehr. Es ist daher vorteilhaft, einen Stoppbefehl zu verifizieren.

Damit ist der Ablauf beendet, der Verfahrensablauf hat das ENDE erreicht.

Begriffe wie im Wesentlichen, vorzugsweise und dergleichen sowie möglicherweise als ungenau zu verstehende Angaben sind so zu verstehen, dass eine Abweichung um plus-minus 5 %, vorzugsweise plus-minus 2 % und insbesondere plus minus ein Prozent vom Normalwert möglich ist. Die Anmelderin behält sich vor, beliebige Merkmale und auch Untermerkmale aus den Ansprüchen und/oder beliebige Merkmale und auch Teilmerkmale aus der Beschreibung in beliebiger Art miteinander zu kombinieren, dies auch außerhalb der Merkmale unabhängiger Ansprüche.

### Bezugszeichenliste

- 20: autonom fahrendes Fahrzeug
- 22: Mensch-Maschine-Schnittstelle
- 24: Einheit für Spracheingabe
- 26: Modul für Erkennung von Gesten
- 28: Bildschirm
- 30: Feld
- 32: GPS-Einheit
- 34: Bibliothek
- 36: Liste möglicher Haltepunkte
- 38: Datei
- 40: Box
- 42: Box
- 44: Box
- 46: Raute
- 48: Box
- 50: Box

## Patentansprüche

1. Autonom fahrendes Fahrzeug (20), insbesondere autonom fahrendes Shuttle, mit einer GPS-Einheit (32), der eine Bibliothek (34) von Sonderzielen zugeordnet ist,
**gekennzeichnet durch** eine Mensch-Maschine-Schnittstelle (22), die mit der GPS-Einheit (32) verbunden ist und die mindestens eines der folgenden Eingabemittel für die Eingabe eines Befehls zum möglichst sofortigen Stoppen des Fahrzeugs (20) aufweist:
- eine Einheit für Spracheingabe (24), die mit der Schnittstelle (22) verbunden ist,
- ein Modul für Erkennung von Gesten (26), das mit der Schnittstelle (22) verbunden ist, und
- einen berührungsempfindlichen Bildschirm (28), der mit der Schnittstelle (22) verbunden ist.

2. Autonom fahrendes Fahrzeug (20) nach Anspruch 1, **dadurch gekennzeichnet, dass** ein Eingabemittel für die Eingabe eines Befehls ein Feld (30) aufweist, dessen Betätigung der Schnittstelle (22) anzeigt, dass nun ein konkreter Befehl zum möglichst sofortigen Stoppen des Fahrzeugs (20) folgt, oder dessen Betätigung den Befehl zum möglichst sofortigen Stoppen des Fahrzeugs (20) darstellt.

3. Autonom fahrendes Fahrzeug (20) nach Anspruch 2, **dadurch gekennzeichnet, dass** das Feld (30) auf dem berührungsempfindlichen Bildschirm (28) ausgebildet ist.

4. Autonom fahrendes Fahrzeug (20) nach einem der vorangegangenen Ansprüche, **dadurch gekennzeichnet, dass** die Schnittstelle (22) eine Liste möglicher Haltepunkte (36) aufweist, die mit der GPS-Einheit (32) verbunden ist.

5. Autonom fahrendes Fahrzeug (20) nach Anspruch 4, **dadurch gekennzeichnet, dass** es weiterhin eine Datei (38) von Zielen aufweist, die einen raschen Stopp ermöglichen, und dass diese Datei (38) vorzugsweise mit der Bibliothek (34) von Sonderzielen verknüpft ist.

6. Verfahren zum raschen Stoppen eines autonom fahrenden Fahrzeugs (20) aufgrund eines Befehls eines an Bord des Fahrzeugs befindlichen Passagiers und während einer autonomen Fahrt des Fahrzeugs (20) zu einem zuvor ausgewählten Endziel, mit den folgenden Verfahrensschritten
a) der Passagier identifiziert ein zuvor dem Fahrzeug (20) nicht mitgeteilten Zwischenziel,
b) der Passagier erteilt einer Schnittstelle (22) einen Stoppbefehl, insbesondere durch Spracheingabe, Gesteneingabe oder Eingabe auf einem berührungsempfindlichen Bildschirm,
c) die Schnittstelle (22) ermittelt unter Berücksichtigung von Daten einer GPS-Einheit (32) und einer Liste möglicher Haltepunkte (36), ob ein Stopp des Fahrzeugs (20) unmittelbar oder in näherer Umgebung möglich ist, ermittelt mit Hilfe der Steuerungssoftware des Fahrzeugs (20) mindestens einen freien Halteplatz, und teilt, wenn ein Stopp möglich ist und ein freier Halteplatz gefunden wurde, dem Passagier mit, dass ein Stopp erfolgen wird,
d) die Schnittstelle (22) veranlasst die Steuerungssoftware des Fahrzeugs (20), zu dem freien Halteplatz zu fahren und dort zu stoppen.

7. Verfahren nach Anspruch 6, gekennzeichnet, dass der Passagier den Stoppbefehl im Schritt b) dadurch erteilt, dass er zunächst ein Feld (30) betätigt, das der Schnittstelle (22) anzeigt, dass ein konkreter Befehl unmittelbar folgt.

8. Verfahren nach Anspruch 6 oder 7, **dadurch gekennzeichnet, dass** vor dem Schritt c) die Schnittstelle (22) nach der voraussichtlichen Dauer des Stopps fragt, insbesondere fragt, ob nur ein kurzer Halt zum Zwecke des Aussteigens oder ein längeres Parken gewünscht wird, und dass die Schnittstelle (22) den Passagier daraufhin zu einer Eingabe über seinen Haltewunsch auffordert.
